# EUROPÄISCHE PATENTSCHRIFT

(11) **EP 1 397 901 B1**
(45) Veröffentlichungstag und Bekanntmachung des Hinweises auf die Patenterteilung: **19.03.2008**
(21) Anmeldenummer: 02748601.8
(22) Anmeldetag: 19.06.2002
(51) Int. Cl.: H04L 29/12

(54) **VERFAHREN ZUR AUTOMATISCHEN WEGESTEUERUNG VON INFORMATIONEN**
METHOD FOR AUTOMATICALLY CONTROLLING PATHS OF INFORMATION
PROCEDE DESTINE A LA COMMANDE AUTOMATIQUE DE TRAJECTOIRES D'INFORMATIONS

(30) Priorität: 20.06.2001 DE 10129371
(43) Veröffentlichungstag der Anmeldung: 17.03.2004
(73) Patentinhaber: T-Mobile Deutschland GmbH, 53227 Bonn (DE)
(72) Erfinder: KUNKEL, Helmut, 67098 Bad Dürkheim (DE)
(74) Vertreter: Riebling, Peter
(86) Internationale Anmeldenummer: PCT/DE2002/002244
(87) Internationale Veröffentlichungsnummer: WO 2003/001768

(56) Entgegenhaltungen:
- EP-A- 0 465 011
- WO-A-00/79780
- WO-A-91/01606
- WO-A-95/06386
- US-A- 5 488 651
- US-A- 5 872 641
- GRONERT EL: "FAX SERVERS GETA FIX ON INCOMING MESSAGES" DATA COMMUNICATIONS, MCGRAW HILL. NEW YORK, US, Bd. 23, Nr. 10, 1. Juli 1994 (1994-07-01), Seiten 55-56C, XP000457360 ISSN: 0363-6399

## Beschreibung

Die Erfindung betrifft ein Verfahren zur automatischen Wegesteuerung von Informationen aller Art bei einer datenempfangenen Stelle.

Bei Firmen, Organisationen und Behörden gehen täglich eine Vielzahl von Informationen in verbaler und nonverbaler Form ein, die entsprechend behandelt und bearbeitet werden müssen. Informationen können per Post, Telefax, elektronischen Nachrichten (E-Mail, SMS u.ä.) oder verbalen Informationen wie Telefonate und Anrufbeantworter (gespeicherte Sprachnachrichten) eingehen. Diese Informationen sind zum Zweck einer anschließenden Sachbearbeitung nach Vorgang, Themenschwerpunkt der Information und / oder Bestandsdaten, z.B. Kundennummer u.ä., zuzuordnen und aufzubereiten, indem sie sortiert und an die entsprechenden Stellen verteilt werden. Die Informationen werden ferner dokumentiert (Archivierung / Statistik).

Den zu versendenden Informationen stehen seitens des Empfängers zentrale Eingangskanäle, z.B. zentrales Telefax, zentrale Telefonauskunft zur Verfügung. Dort werden Informationen gesammelt. In der Regel erfolgt keine automatische Zuordnung und oder weitere Ver- und Bearbeitung.

Dabei kann es zu Beeinträchtigungen des Informationsflusses kommen. So gehen die Informationen mitunter mehrfach ein, aus Unsicherheit des Senders über den tatsächlichen Eingang. Dies belastet den Empfänger unnötig. Ferner wird der erwartete Eingang zum Teil seitens des Versenders telefonisch nachgefasst, was zu einer erheblichen Belastung der telefonischen Anlaufstelle des Empfängers führt, die den Eingang wiederum in der Regel überhaupt nicht nachvollziehen kann.

Es kann vorkommen, dass Informationen ungesehen verloren gehen oder nicht beim richtigen Eingangskanal eingehen. Diese Informationen müssen zunächst nochmals bzw. an den richtigen Empfänger neu versendet werden. Nicht immer wird auf Anhieb bei der Weiterleitung der richtige Empfänger angesteuert. Oft muss der richtige Eingangskanal vom Sender erst recherchiert werden.

Weiterhin können die Informationen beim Empfänger nicht in Echtzeit auf Eingang und Vollständigkeit geprüft werden. So werden die Informationen in der Regel innerhalb des Eingangskanals unabhängig ihrer Dringlichkeit oder Wichtigkeit gleichbehandelt, da eine Differenzierung nicht möglich ist.

Die Informationen gehen verbal oder nonverbal ein. Eine Mischform ist meist nicht möglich.

Schließlich können die Informationen aus dem laufendem Arbeitsprozess nicht "abgefangen" werden, um Optionen wie Löschung, z.B. Storno bzw. wegen Überschneidung eines parallel eingeleiteten Vorganges, Änderung, Splitten und / oder Weiterleiten, Ausdruck etc. wahrnehmen zu können

Die WO 91/01606 A offenbart ein Verfahren zur automatischen Wegesteuerung von Telefax-Übertragungen, wobei eine datenempfangende Stelle einer datensendenden Stelle spezielle Eingangskanäle zur Verfügung stellt, die anhand eines auf dem Telefax angebrachten Barcodes unterschieden werden. Der Barcode dient als Schlüssel beim Dateneingang und steuert die Verfahrensweise im Umgang mit den Informationen beim Empfänger.

Die US 5 872 641 A betrifft ebenfalls ein Fax-Übertragungsverfahren unter Verwendung von Subadressnachrichten, mit denen eine gezielte Weiterleitung (Routing) oder eine Umsetzung der Faxnachricht auf andere Datenformate vorgenommen wird.

Die Aufgabe der Erfindung besteht darin, ein Verfahren zur automatischen Wegesteuerung von Informationen anzugeben, welches es erlaubt, jede Art von Information, die von einem Sender an einen Empfänger übermittelt wird, zur weiteren Bearbeitung gezielt einer Bearbeitungsstelle oder anderen vorgesehenen Stelle zuzuordnen.

Diese Aufgabe wird durch die im Patentanspruch 1 angegebenen Merkmale gelöst. Die abhängigen Ansprüche 2-15 beschreiben weitere Ausführungen.

Das erfindungsgemäße Verfahren stellt einem Sender von Informationen spezielle Eingangskanäle als Eingangs-Adress-Kennungen (EAK) zur Verfügung, die beim Empfänger als Schlüssel bei Dateneingang die Verfahrensweise im Umgang mit den Informationen steuern. Eine EAK kann zudem zu einem laufenden oder erwarteten Prozess eines Informationseinganges vergeben werden. Während einer Recherche nach einer Information, deren Eingangsstatus aktuell ungeklärt ist, kann dieser gesuchten Information im Voraus eine bestimmte EAK zugeordnet werden.

Die Ausprägungen des Verfahrens gemäß den abhängigen Patentansprüchen gewährleisten in teil- oder vollautomatisierter Form den effizienten workflow und zeitnahen Informationsfluss.

Erfindungsgemäß werden Informationen, wie z.B. Dokumente (Post / Fax), Daten in elektronischer Form (E-Mail, SMS. u.ä.) und / oder Sprachnachrichten, die von einem Sender an einen Empfänger übermittelt werden, sei es in Form von interner Versendung (innerhalb einer Organisation) oder externem Eingang, z.B. seitens eines Kunden / Interessenten, zur weiteren Bearbeitung, Kenntnisnahme, Bestätigung (rechtliche Absicherung), Element eines workflows und / oder Archivierung gezielt der jeweiligen Bearbeitungsstelle, der vorgesehenen technischen Schnittstelle und / oder den jeweiligen Bestandsdaten des Senders (Historie) zugeordnet.

Die Informationen können erfindungsgemäß auch in kombinierter Form vorliegen, z.B. verbale Erläuterung des Senders zu einem Dokument. Optional können diese im weiteren in Textform transformiert werden.

Das Verfahren gewährleistet in vorteilhafter Weise:
- das Generieren von Identifikationen
- das Erkennen dieser Zuordnung
- die Definition einer zugeordneten Verfahrensweise

Das erfindungsgemäße Verfahren wird technisch vorzugsweise mittels einer speziellen Software realisiert. Die Software korrespondiert mit der Administration von Kommunikations-Endgeräten und / oder deren Software und kann entsprechende Schnittstellen zu weiterer Software (z.B. Kundenpflege, Logistik, u.ä.) aufweisen.

Die dabei realisierte Daten-Infrastruktur gewährleistet das Initiieren von Folgeprozessen, den Einstieg in vorhandene Prozessketten und ein Reporting.

Standardeinstellungen und Automatismen der Software werden von autorisiertem Personal konfiguriert.

Einzelprozesse werden über ein Bedienermenu (Maske) angestoßen. Das Bediener-Menü ermöglicht, unabhängig des Eingangs-Status, zu einer Information folgende Funktionen:
- die Definition einer Recherche nach allgemeinen Suchkriterien
- das Zuordnen einer Identifikation, indem ein spezielles Kriterium generiert wird
- die Recherche über eine zugeordnete Identifikation
- das Zuordnen von Vorgehensweisen zur Ver- und Bearbeitung bei nachfolgendem Eingang bzw. erfolgreicher Suche (Treffer)

Dazu mögliche Optionen für den Umgang mit den Informationen sind: Verarbeiten, Priorisieren, Signalisieren des Einganges / Vorhandenseins, Löschen / Verschieben / Kopieren, Bearbeiten / Bestätigen / Ändern, Weiterleiten / Splitten, Dokumentieren / Archivieren und Reporten.

Der Sender der Informationen kann eine Person sein, die eine Nachricht übermitteln möchte, z.B. eine externe Person (Kunde) oder eine interne Person (Mitarbeiter einer Organisation).

Der Sender kann aber auch ein Kommunikations-Endgerät oder eine entsprechende Software sein. Der Eingang einer Information ist in diesem Falle erwartet oder bereits vorhanden / erfolgt.

Die speziellen Eingangskanäle in Form von Eingangs-Adress-Kennung (EAK) werden den Sendern von Informationen, z.B. Kunden einer Organisation, vom Empfänger als technischer Standard bereitgestellt bzw. werden von der Organisation (Empfänger) zu aktuellen oder anstehenden Vorgängen generiert.

Die EAKs dienen im weiteren als Informations-Identifikationen, denen standardisierte bzw. separate Verfahrensweisen zugeordnet sind, die den Umgang mit der Information steuern.

Je nach Anwendung können verschiedene Ausprägungen der EAKs möglich sein. Die EAKs können als Zielwahl / elektronische Zieladresse oder als Strichcode oder anderes datenlesbares Medium generiert sein. Ebenfalls möglich ist die Erkennung einer EAK, indem eine Sprachanalyse oder ein identifizierbarer Scan beim Datenempfänger vorgehalten ist, anhand dem die EAK identifiziert und einem Sender zugeordnet werden kann.

Erfindungsgemäß sind verschiedene Anwendungs-Varianten einer EAK denkbar.

Die EAK kann methodisch nach einer definierten Struktur verwendet werden. Dem Sender und dem Empfänger ist das Vorgehen, d.h. die Behandlung der mit dieser EAK versehenden Information bekannt. Die Nutzung der EAK durch den Sender erfolgt je nach Bedarf.

Gemäß diesem Standardverfahren wird die EAK einer Sendergruppe mitgeteilt. Die EAK ist verarbeitungstechnisch gebildet aus einer Kernadresse und einer Quelladresse. Die Kernadresse entspricht dem Zugang zur Organisation, z.B. einer zentralen Zielrufnummer oder Adresse. Sie entspricht der Zielwahl /adresse eines zentralen Datenempfängers oder ist bereits auf Aktionskennzeichen / Zuständigkeit modifiziert

Die Quelladresse dient zur Identifikation des Senders und kann z.B. eine Kundennummer, eine Mobilfunknummer zu einem Mobilfunkvertrag oder ein anderes beliebiges Identifikationsmerkmal sein.

Dem Empfangsgerät der Kernadresse, z.B. ein zentrales Fax, kann ein weiteres Daten-Erkennungssystem angehängt sein. Jeder Kunde (Sender) der Organisation (Empfänger) hat somit die Möglichkeit, seine zu versendende Information "persönlich" zu kennzeichnen, indem beispielsweise der Kernwahl zur zielgerichteten Versendung eines Dokumentes (oder der Anwahl einer telefonischen Anlaufstelle) die Quelladresse (z.B. Rufnummer des Senders) numerisch angehängt wird. Das "Anhängen" kann auch in einem anderen Datenzeichenformat stattfinden, vorausgesetzt, die datenempfangende Stelle kann diese über die geschalteten Kommunikations-Empfangsgeräte erkennen.

Zusätzlich kann die EAK um einen bereits publizierten Aktions- oder Identifikationscode erweitert sein.

Jede EAK kann gemäß einer weiteren Ausgestaltung der Erfindung separat zur Identifikation eines workflow-Elementes verwendet werden. Die Erstellung der EAK bezüglich eines bestimmten Vorgangs erfolgt durch den Empfänger. Die EAK wird dann an den Sender übermittelt. Beim Empfänger/Verarbeiter wird die Nutzung der EAK einzeln definiert, um die zu versendende Information bei Eingang zu steuern.

Es erfolgt also eine Einzelvergabe der EAK in Hinblick auf aktuelles Kundenanliegen. Ein bestimmtes Dokument des Senders soll nachfolgend beim Empfänger eingehen. Ein Sachbearbeiter der Organisation generiert eine EAK über das Bedienermenü.

In diesem Falle kann die EAK gebildet sein aus:
- einer bereits dem Dokument zugeordneten Kernadresse
- einer Quelladresse
- einer einmalig generierten EAK

Die Einmaligkeit einer EAK muss nicht zwingend über die Identifikation einer erkennbaren (numerischen) Abfolge definiert sein. Vielmehr besteht auch die Möglichkeit, ein Zeitfenster für einen vorgesehenen Datenempfang - einer oder mehreren Kernadressen zugeordnet - bereitzustellen. Dies macht z.B. Sinn, wenn die Quelladresse nicht eindeutig zugeordnet werden kann, aber dennoch eine Vereinbarung zur Informationsübermittlung getroffen werden soll.

Die Kommunikation der EAK vom Empfänger an den Sender kann z.B. verbal erfolgen, indem die EAK dem Sender als Zielwahladresse mitgeteilt wird. Eine elektronische Übermittlung als Datensatz ist ebenfalls möglich. Solch ein Datensatz kann auch beispielsweise eine Datei beinhalten, die einen Ausdruck eines im weiteren datenlesbaren Aufklebers (Etiketts) bereitstellt. Ebenfalls kann an dieser Stelle vorgesehen sein, dass der Information ein Responseteil (Antwortteil) oder ein multiple-choice-Katalog angehängt ist. Derartige, einen Dialog fortsetzende Instrumente, die eine erneute Kontaktaufnahme ersparen, können ebenfalls bei Informationseingang bei der datenempfangenden Stelle zur Verfügung gestellt sein, so dass ein spezieller Informationseingang unmittelbar einer Reaktion erfährt.

Eine weitere Möglichkeit besteht in Form eines Ausdrucks, der auf einem Dokument verzeichnet oder diesem zugeordnet wird. Dieser Form der EAK kann anliegenspezifisch aus Dokumentenvorlagen oder beispielsweise als Fax versendet werden.Schließlich kann eine EAK auch postalisch versendet und auf einem Dokument verzeichnet bzw. diesem zugeordnet oder aber als Aufkleber versendet werden. Die als Druck oder Aufkleber versendeten EAK's sind bei Informationseingang datenlesbar, z.B. per Scanner. Ebenso kann eine EAK generiert und in Form einer Datei gespeichert sein, die im weiteren einen Ausdruck eines solchen Aufklebers oder eines anderweitig identifizierbaren Mediums ermöglicht.

Wie bereits erwähnt kann eine EAK zudem zu einem laufenden oder erwarteten Prozess eines Informationseinganges vergeben werden. Während einer Recherche nach einer Information, deren Eingangsstatus aktuell ungeklärt ist, kann dieser gesuchten Information im Voraus eine bestimmte EAK zugeordnet werden. Hierzu können mögliche Eingangsidentifikationen an Kommunikations-Endgeräten definiert und als Recherchedefinition festgelegt werden. Es erfolgt ein Erstellen einer EAK durch den Empfänger und ein Festlegen der Verfahrensweise bei Identifikation der Information, z.B. bei Eingang oder Vorhandensein.

Dies ermöglicht es, dass eine Information zur weiteren Ver- und Bearbeitung auf bereits erfolgten Eingang oder zu einem erwarteten Eingang recherchiert werden kann.

Der Empfänger öffnet innerhalb des Bedienermenüs eine Suchmaske und definiert mögliche Eingangs-Identifikationen, wie z.B. Standard-EAK, Datum, Zeitraum, Kommunikations-Endgerät u.ä.

War die Suche erfolgreich (Treffer), so wird nachfolgend geprüft, ob der Information bereits eine standardisierte oder spezifisch zugeordnete EAK zugewiesen ist. Ist dies der Fall, wird die EAK zur Definition der weiteren Ver- und oder Bearbeitung herangezogen.

Ist der Information noch keine EAK zugeordnet, so kann dieser nach Bedarf eine EAK zugeordnet werden, welche die weitere Ver- und oder Bearbeitung der Information definiert.

War die Suche nicht erfolgreich, so kann eine Übernahme oder Modifikation der zur Recherche verwendeten Suchkriterien erfolgen. Der erwarteten Information wird eine EAK zugeordnet, welche die weitere Verfahrensweise bei Eingang der Information definiert. Hier wird also eine EAK über Recherchekriterien definiert, obschon faktisch noch keine Information vorliegt.

Es kann also über das Bediener-Menü die Recherche von Informationen per Definition von Suchkriterien festgelegt werden. Nach Bedarf wird diesen Eingangsidentifikationen eine EAK zugeordnet, wobei die EAK die gewünschte Verfahrensweise zur Information definiert. Die Suche nach einer Information wird gestartet und es wird definiert, welche Kommunikations-Endgeräte oder -Software, z.B. über eine entsprechende Daten-Schnittstelle, zum Recherche-Prozess angesteuert werden.

### Beispiel:

Der Empfänger erwartet ein Telefax von einem Sender. Der Sender war jedoch zur Mitteilung einer vom Empfänger separat generierten EAK nicht erreichbar. Eine eventuell bereits versendete bzw. beim Empfänger zum Eingang anstehende Information soll "abgefangen" und bearbeitet werden. Vom Empfänger können nun Suchkriterien, z.B. Name des Senders, Quelladresse oder z.B. eine verwendete Kennung des zur Informationsübermittlung verwendeten Gerätes (z.B. Faxnummer) festgelegt und die Suche nach der Information gestartet werden.

Ist die Suche aktuell erfolgreich, so kann der Empfänger die eingegangene Information und eventuell bereits vordefinierte Verfahrensweisen sichten. Dieser Information kann dann gegebenenfalls eine separate EAK zugeordnet werden. Es können auch bei Bedarf die Verfahrensweisen der Ver- und Bearbeitung geändert bzw. umdefiniert werden.

Ist die Suche aktuell nicht erfolgreich, so können die aktuellen Suchkriterien beibehalten oder geändert werden.

Diesen Suchkriterien, die eine bestimmte Information definieren kann eine separate EAK zugeordnet werden sowie bestimmte Verfahrensweisen für die Ver- und Bearbeitung, welche nach dem Eingang der gesuchten Informationen auf diese angewendet werden.

Die Verfahrensweise im Umgang mit der Information können vielfältiger Natur sein und jeder EAK einzeln oder in Kombination zugeordnet werden.

Es kann eine Transformation der eingehenden Daten in geeignete Form zur weiteren Versendung an definierte Schnittstellen erfolgen. Ferner kann die Information priorisiert werden, indem ein gesonderter Umgang innerhalb des vorgesehenen workflows definiert wird.

Weiterhin kann bei Eingang der Information automatisch ein Feedback in Form einer kontextsensitiven Empfangsbestätigung (verbal / nonverbal) an den Sender gesendet werden.

Bei Eingang der Information kann auch ein Kontaktaufbau zu einem Sachbearbeiter des Empfängers durch Signalisieren am PC zur Bearbeitung erfolgen.

Ein Ausdruck der Information kann ebenfalls automatisiert werden.

Eine wichtige Möglichkeit ist das Abfangen der Information mit Daten-Abgleich. Dazu wird automatisch der tatsächliche Inhalt der eingegangenen Information im Vergleich zu der im Rahmen der EAK hinterlegten Information sowie die jeweilig vorgesehene Verfahrensweise auf Übereinstimmung bzw. Abweichung geprüft. Infolge kann ein Bestätigen oder modifizieren des angegliederten workflows vorgenommen werden, wie z.B. stornieren, splitten, weiterleiten, ausdrucken. transformieren in anderes Daten-Medium, ändern, Rückmeldung senden, automatische Reports, kommentieren, anstoßen anderer geeigneter Folgeprozesse.

Die Ausprägungen des Verfahrens gewähren den Vorteil eines effizienten workflows durch erweiterte Möglichkeiten der Informationsbe- und verarbeitung
- Es ist ein kombinierter Empfang von verbalen Erläuterungen des Senders zu einer schriftlichen Information möglich
- Das Verfahren ermöglicht ein "abfangen", selektieren, priorisieren, umleiten, splitten, ändern, löschen, signalisieren, aufblenden der Information.
- Zu jeder Information kann eine Verfahrensweise definiert werden, z.B. kommentieren, beschränken von Wenn-Dann-Geboten (Gegenüberstellen von getroffenen Vereinbarungen / Entscheidungen seitens einer Organisation zum Inhalt einer kundenseitig gesendeten oder zum Eingang anstehenden Information)
- Das Verfahren ermöglicht ein sichten und abgleichen, Bestätigen zum Einleiten (entspricht die Information der zugeordneten Verfahrensweise, werden Folgeschritte durch Bestätigen eingeleitet. Ggf. Ändern und dann Bestätigen)
- Folgeprozesse können definiert und initialisiert werden.
- Ein dokumentieren und archivieren der Informationen ist leicht möglich.

Ferner ermöglicht die Erfindung einen zeitnahen Informationsfluss beim Empfänger.
- zum Eingang anstehende Informationen können präpariert werden
- auf vorhandene Information kann konkret recherchiert werden
- der aktuellste Stand (Anforderung Verfahrensweise) kann
   - dokumentiert
   - definiert
   - reported werden
- Informationen und die zugeordnete Verfahrensweise können zur weiteren Sachbearbeitung personenbezogen adressiert werden

Das Verfahren ermöglicht eine Kostenreduktion durch Entlastung des Posteingangs bei der Verteilung und Zuordnung von Informationen, dadurch dass die Informationen senderseitig zu eigenen Bestandsdaten voradressiert werden.

Die angeschlossene automatisierte Datenvermittlung gemäß der Erfindung übernimmt ein Scannen oder weiterleiten, Signalisieren und Aufblenden beim entsprechenden Sachbearbeiter bzw. einer automatisierte Verarbeitung und Dokumentation und löst einen Ausdruck und eine Verteilung im herkömmlichen Sinne ab.

Das hat eine Entlastung des Empfängers und Beschleunigung der Bearbeitung zur Folge.

Empfangsbestätigungen werden automatisiert versendet, z.B. abhängig Kundenwert und der EAK. Fragen zum Eingang einer Information per Anruf des Senders entfallen.

Informationen können seitens Versender verbal kommentiert werden. Telefonate zur Klärung per Rückruf seitens der Organisation werden stark vermindert.

Informationen erhalten spezifische Kennungen, denen eine konkrete Verfahrensweise zugeordnet ist. Das gewährleistet eine gezielte und direkte Sachbearbeitung. Gewünschte Folgeprozesse werden automatisch angestoßen.

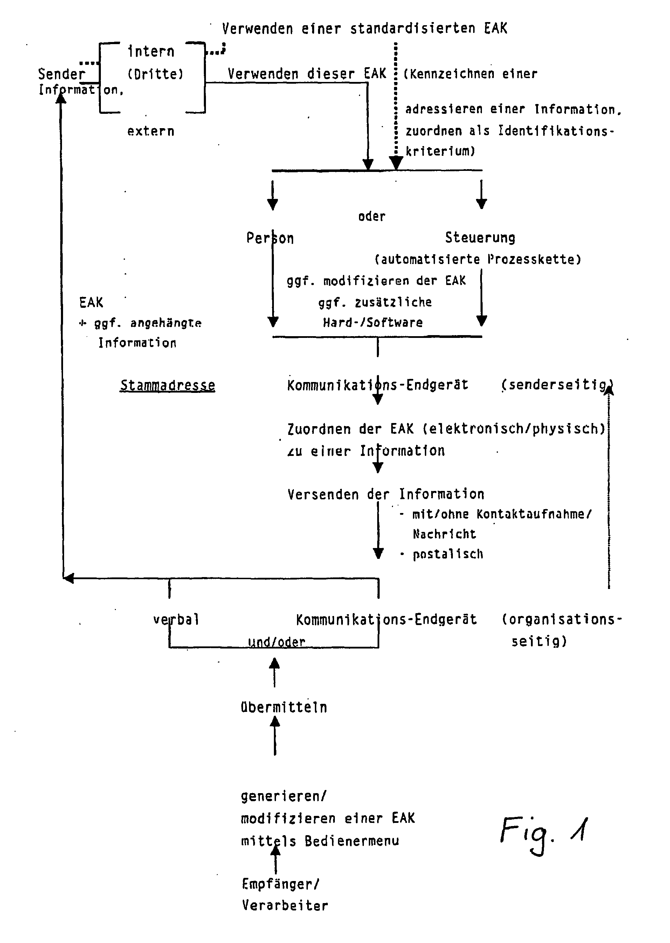

Ein Ausführungsbeispiel der Erfindung wird anhand der Zeichnungsfigur 1 erläutert. Figur 1 zeigt den Informationsfluss beim erfindungsgemäßen Verfahren.

Folgende wesentliche Einrichtungen sind am Verfahren beteiligt:

### Empfänger/Verarbeiter

Hier ist die Kontaktinstanz gemeint:
- welche das Verfahren in die eigene Telekommunikations-Infrastruktur eingebunden hat
- bei der das Bedienermenü zur Definition der Wegesteuerung verfügbar ist
- die die technische Plattform bereitstellt
- die die System-Administration vornimmt
- Kombination

### Sender

Hier ist die Kontaktinstanz gemeint, welche eine Information einem bestimmten Empfänger zukommen lassen möchte.

### Beispiele:

| | |
|---|---|
| Kunde | -> Organisation |
| Mitarbeiter A einer Organisation | -> Mitarbeiter B einer Organisation |
| Kommunikations-Endgerät A | -> Kommunikations-Endgerät B |

### Kommunikations-Endgerät

Meint hier, über die Verwendung herkömmlicher Apparate, wie z.B. Telefax und Telefon, etc, hinaus auch solche oder ähnliche technische Einrichtungen in Form von Hard- und/oder Software/Schnittstellen, welche im weiteren Funktionen
- zum Erkennen und oder
- Generieren und oder
- Verarbeiten
- Abbilden von Daten (wie z.B. einer EAK)
aufweisen.

Ein Kommunikations-Endgerät ist nicht zwingend physisch beim Sender bzw. Empfänger/Verarbeiter vorgehalten.

Als solches können ebenfalls
- Schnittstellen innerhalb eines Telekommunikationsnetzes
- mobile technische Einrichtungen, z.B. Transponder an einem Container angesteuert werden.

Das Verfahren gestattet es, dass eine generierte bzw. zu generierende EAK im Zuge ihrer Verwendung Veränderung ihrer Zusammensetzung erfährt.

Diese Modifikation kann manuell bzw. automatisiert erfolgen.

Das Flussdiagramm zeigt eines beispielhaften Informationsfluss

Die Pfeile mit durchgezogener Linie definieren einen Weg. Es erfolgt ein Generieren einer spezifischen EAK (organisationsseitig) bzw. Vermitteln der EAK an den Sender zur weiteren Verwendung, z.B. verbal.

Der Pfeil mit dünner, gestrichelter Linie definiert den Weg für eine Vermittlung einer EAK an das Kommunikations-Endgerät des Senders zur weiteren Verwendung.

Der Pfeil mit dicker, gestrichelter Linie definiert den Weg für ein Verwenden einer standardisierten EAK seitens eines Senders zum Zwecke eines Informationstransfers an einen Empfänger/Verarbeiter bzw. zur Kennzeichnung einer Information.

Eine EingangsAdressKennung (EAK) ist eine zur Abwicklung des gewünschten Transfers
- generierte
- abgebildete
- abbildbare (Ausdruck. Prägung etc.)
- applizierte
- identifizierbare (Kombination)

### Kennung

Eine EAK kann gebildet sein aus:

Beispiele (beliebige Kombination möglich

| | | |
|---|---|---|
| Stammadresse: | Nummer eines Faxgerätes, (i.d.R. vom Kunden einer Organisation) ggf. um eine, den Sender in persona bzw. eine Kostenstelle näher identifizierende | senderseitig |
| | Kennung erweitert | senderseitig |
| | | |
| Quelladresse | Zielwahl, wie Mobilfunknummer o.ä. | senderseitig |
| | | |
| Kernwahl | Zielwahl eines Faxgerätes | organisationsseitig |
| | | |
| Aktionscode | spezielle Kennung: i.d.R. numerisch, Vergabe seitens der Organisation | organisationsseitig |
| | | |
| Datei-Eigenschaft(en) | Dateigröße, Dateiart, etc. | |
| | | |
| Individual-Identifikation | Stimme, etc. | |
| | | |
| Zeitfenster | Datum, Uhrzeit von/bis, ggf. Beginn rückwirkend | |
| | | |
| datenlesbare Medien | Strichcode o.ä. | |
| | | |
| datenabgleichbare Medien | Sonstige | |

Unter Information wird verstanden
Sprache, Dokumente, Dateien, SMS, physische Sendungen (z.B. Paket), Sonstige
im Kontext kann auch eine EAK eine Information darstellen

## Patentansprüche

1. Verfahren zur automatischen Wegesteuerung von Informationen aller Art bei einer datenempfangenen Stelle, wobei dieser Empfänger einem Sender spezielle Eingangskanäle in Form von Eingangs-Adress-Kennungen, EAKs, zur Verfügung stellt, die als Schlüssel bei Dateneingang die Verfahrensweise im Umgang mit den Informationen steuern,
**dadurch gekennzeichnet**
**dass** die Eingangs-Adress-Kennung vom Empfänger zu einem laufenden oder erwarteten Prozess eines Informationseinganges vergeben wird, wobei im Empfänger während einer Recherche nach einer bestimmten Information, deren Eingang oder Vorhandensein aktuell ungeklärt ist, dieser gesuchten Information im Voraus eine bestimmte Eingangs-Adress-Kennung zugeordnet wird.

2. Verfahren nach Anspruch 1, **dadurch gekennzeichnet, dass** Informationen in Form von Dokumenten, elektronischen Daten und / oder Sprachnachrichten einzeln oder in Kombination verarbeitet werden.

3. Verfahren nach einem der Ansprüche 1 oder 2, **dadurch gekennzeichnet, dass** dem Sender spezielle Eingangs-Adress-Kennung, EAK, als Standard EAKs bereitgestellt werden.

4. Verfahren nach einem der Ansprüche 1 bis 3, **dadurch gekennzeichnet, dass** die Eingangs-Adress-Kennungen von dem Sender zu aktuellen oder anstehenden Vorgängen generiert werden.

5. Verfahren nach einem der Ansprüche 1 bis 4, **dadurch gekennzeichnet, dass** die Eingangs-Adress-Kennungen als Informations-Identifikationen dienen, denen standardisierte bzw. speziell definierte Verfahrensweisen zugeordnet sind, die den Umgang mit der Information steuern.

6. Verfahren nach einem der Ansprüche 1 bis 5, **dadurch gekennzeichnet, dass** die EAK als Zielwahl / elektronische Zieladresse generiert wird.

7. Verfahren nach einem der Ansprüche 1 bis 5, **dadurch gekennzeichnet, dass** die EAK als Strichcode oder anderes datenlesbares Medium generiert wird.

8. Verfahren nach einem der Ansprüche 1 bis 7, **dadurch gekennzeichnet, dass** der Empfänger dem Sender/eine Reihe von EAKs auf Vorrat vergibt, die senderseitig nach Bedarf verwendbar sind.

9. Verfahren nach einem der Ansprüche 1 bis 8, **dadurch gekennzeichnet, dass** die EAK separat zur Identifikation eines Informationselementes vom Empfänger generiert, an den Sender übermittelt und bezogen auf das Informationselement vom Sender verwendet wird.

10. Verfahren nach einem der Ansprüche 1 bis 9, **dadurch gekennzeichnet, dass** definiert wird, welche Kommunikations-Endgeräte oder -Software, z.B. über eine entsprechende Daten-Schnittstelle, zum Recherche-Prozess angesteuert werden.

11. Verfahren nach einem der Ansprüche 1 bis 10, **dadurch gekennzeichnet, dass** die EAK aus einer Kernadresse und einer Quelladresse gebildet ist.

12. Verfahren nach Anspruch 11, **dadurch gekennzeichnet, dass** die Kernadresse der Identifikation des Empfängers entspricht.

13. Verfahren nach Anspruch 11, **dadurch gekennzeichnet, dass** die Quelladresse der Identifikation des Senders entspricht.

14. Verfahren nach einem der Ansprüche 1 bis 13, **dadurch gekennzeichnet, dass** die EAK zusätzlich um einen weiteren Identifikationscode erweitert ist oder dieser eine vorhandene Kennung substituiert.

15. Verfahren nach einem der Ansprüche 1 bis 14, **dadurch gekennzeichnet, dass** systemseitig eine wiederholte Vergabe von einer EAK generell ausgeschlossen ist, und gegebenenfalls eine Doublettenprüfung auf vorangegangene gleichgerichtete Bearbeitung hinweist.

## Claims

1. Method for the automatic routing of information of all kinds in a data reception point, wherein this receiver provides a transmitter with special reception channels in the form of input address identifications, IAIs, which as keys for data input control the procedure for handling the information,
**characterised in that**
the input address identification is assigned by the receiver to an ongoing or awaited process of information input, wherein in the receiver during a search for a certain item of information whose input or presence is currently unclear a certain input address identification is assigned to this sought information in advance.

2. Method according to claim 1, **characterised in that** items of information in the form of documents, electronic data and/or speech messages are processed individually or in combination.

3. Method according to one of claims 1 or 2, **characterised in that** special input address identification, IAI, are provided to the transmitter in the form of standard IAIs.

4. Method according to any of claims 1 to 3, **characterised in that** the input address identifications are generated by the transmitter for current or queued operations.

5. Method according to claims 1 to 4, **characterised in that** the input address identifications serve as information identifications to which standardised or specially defined procedures are assigned which control the handling of the information.

6. Method according to any of claims 1 to 5, **characterised in that** the IAI is generated as a destination number / electronic destination address.

7. Method according to any of claims 1 to 5, **characterised in that** the IAI is generated as a bar code or other computer-readable medium.

8. Method according to any of claims 1 to 7, **characterised in that** receiver assigns to the transmitter a series of IAIs to hold in reserve which are usable as required by the transmitter.

9. Method according to any of claims 1 to 8, **characterised in that** the IAI generated separately by the receiver for identifying an information element is sent to the transmitter and used by the transmitter with reference to the information element.

10. Method according to any of claims 1 to 9, **characterised in that** it is defined which communication terminal devices or software are addressed for the search process, e.g. via an appropriate data interface.

11. Method according to any of claims 1 to 10, **characterised in that** the IAI is formed from a core address and a source address.

12. Method according to claim 11, **characterised in that** the core address corresponds to the identification of the receiver.

13. Method according to claim 11, **characterised in that** the source address corresponds to the identification of the transmitter.

14. Method according to any of claims 1 to 13, **characterised in that** the IAI is additionally expanded by another identification code or this substitutes an existing identification.

15. Method according to any of claims 1 to 14, **characterised in that** on the system side repeated assignment of an IAI is generally precluded and if need be a doublet check indicates previous rectified handling.

## Revendications

1. Procédé pour orienter automatiquement des informations de toutes sortes, en un point de réception de données, selon lequel le récepteur met à la disposition d'un émetteur des canaux d'arrivée spéciaux, sous la forme d'identifications d'adresse d'arrivée, EAK, qui, comme clés lors de l'arrivée des données, orientent la procédure pour le traitement des informations,
**caractérisé en ce que** l'identification d'adresse d'arrivée est attribuée par le récepteur à une procédure continue ou prévue d'une arrivée d'information, étant précisé que dans le récepteur, pendant une recherche d'une information définie dont l'arrivée ou la présence n'est pas actuellement clarifiée, une identification d'adresse d'arrivée définie est préalablement affectée à cette information recherchée.

2. Procédé selon la revendication 1, **caractérisé en ce que** des informations sous la forme de documents, de données électroniques et/ou de messages vocaux sont exploitées individuellement ou de manière combinée.

3. Procédé selon la revendication 1 ou 2, **caractérisé en ce que** des identifications d'adresse d'arrivée, EAK, sont fournies comme EAK standard à l'émetteur.

4. Procédé selon l'une des revendications 1 à 3, **caractérisé en ce que** les identifications d'adresse d'arrivée sont générées par l'émetteur pour des opérations actuelles ou en attente.

5. Procédé selon l'une des revendications 1 à 4, **caractérisé en ce que** les identifications d'adresse d'arrivée servent d'identifications d'information auxquelles sont affectées des procédures normalisées ou définies spécialement qui orientent le traitement des informations.

6. Procédé selon l'une des revendications 1 à 5, **caractérisé en ce que** l'identification EAK est générée sous la forme d'une sélection ciblée/adresse de destination électronique.

7. Procédé selon l'une des revendications 1 à 5, **caractérisé en ce que** l'identification EAK est générée sous la forme d'un code-barres ou d'un autre support dont les données sont aptes à être lues.

8. Procédé selon l'une des revendications 1 à 7, **caractérisé en ce que** le récepteur attribue à l'émetteur une série d'identifications EAK en réserve, qui peuvent être utilisées suivant les besoins côté émetteur.

9. Procédé selon l'une des revendications 1 à 8, **caractérisé en ce que** l'identification EAK est générée, transmise à l'émetteur et utilisée par celui-ci par rapport à un information d'élément, séparément par rapport à l'identification de l'élément d'information.

10. Procédé selon l'une des revendications 1 à 9, **caractérisé en ce qu'**on définit quels terminaux ou logiciels de communication, par exemple par l'intermédiaire d'une interface de données correspondante, sont commandés pour l'opération de recherche.

11. Procédé selon l'une des revendications 1 à 10, **caractérisé en ce que** l'identification EAK est formée d'une adresse centrale et d'une adresse source.

12. Procédé selon la revendication 11, **caractérisé en ce que** l'adresse centrale correspond à l'identification du récepteur.

13. Procédé selon la revendication 11, **caractérisé en ce que** l'adresse source correspond à l'identification de l'émetteur.

14. Procédé selon l'une des revendications 1 à 13, **caractérisé en ce que** l'identification EAK est étendue à l'aide d'un code d'identification supplémentaire ou celui-ci remplace une identification existante.

15. Procédé selon l'une des revendications 1 à 14, **caractérisé en ce qu'**une attribution répétée d'une identification EAK est généralement exclue, côté système, et un contrôle de doublets signale éventuellement un traitement précédent de même orientation.
